(19)

**Europäisches Patentamt**

**European Patent Office**

**Office européen des brevets**

(11) **EP 1 022 476 A1**

(12) **EUROPEAN PATENT APPLICATION**

(43) Date of publication:
26.07.2000 Bulletin 2000/30

(51) Int. Cl.⁷: **F16C 19/56**

(21) Application number: **00100080.1**

(22) Date of filing: **05.01.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(30) Priority: **19.01.1999 JP 997699**<br><br>(71) Applicants:<br>• **SKF JAPAN LTD.**<br>**Tokyo (JP)** | • **Ueno, Yasuo,**<br>**Queen Heights Kuji A-602**<br>**Kawasaki-shi, Kanagawa (JP)**<br><br>(72) Inventor:<br>**Ueno, Yasuo,**<br>**Queen Heights Kuji A-602**<br>**Kawasaki-shi, Kanagawa (JP)**<br><br>(74) Representative:<br>**Sajda, Wolf E., Dipl.-Phys. et al**<br>**MEISSNER, BOLTE & PARTNER**<br>**Postfach 86 06 24**<br>**81633 München (DE)** |

(54) **Rolling bearing**

(57) A side member (3) is provided on at least one side end portion of a first race ring (2) having a first race way (1), and an annular guide surface (5) which is concentric with the first race way (1) is provided on an inner side of the side member (3), a plurality of rolling elements (9) are arranged between the first race ring (2) and a second race ring (8) having a second race way (7) concentric with and opposed to the first race way (1). A plurality of ball-shaped rotating elements (10) are each disposed between adjacent ones of the rolling elements (9) in a circumferential direction, the plurality of rotating elements (10) being brought into contact with the guide surface (5) of the side member (3) in such a manner as to be capable of rolling thereon.

**FIG.1**

**EP 1 022 476 A1**

**Description**

BACKGROUND OF THE INVENTION

Field of the Invention:

The present invention relates to a rolling bearing which is generally used widely.

Description of the Related Art:

Conventionally, the so-called rolling bearing has a small coefficient of friction by means of the rolling motion of a plurality of rolling elements which are arranged between an outer ring and an inner ring which are raceway rings.

However, sliding motion occurs between, on the one hand, the rolling elements and, and on the other hand, a retainer which supports them or between adjacent ones of the rolling elements themselves in the so-called full roller type which does not have the retainer, so that the sliding motion constitutes a cause of occurrence of intermittent frictional force. In addition, there is a type in which shaft-like rotating elements are respectively arranged between adjacent ones of the rolling elements (Japanese Patent Application No. 335075/1998 filed by the present applicant), and the bearing rotates while supporting the load virtually completely by means of the rolling motion alone, but a reduction in the cost of fabrication of the shaft-like rotating elements and others has been a problem.

SUMMARY OF THE INVENTION

The present invention has been devised in view of the above-described background, and its object is to provide at low cost a rolling bearing in which all the contact portions in the rolling bearing are made to undergo rolling contact, and sliding friction is virtually completely eliminated.

In accordance with the present invention, the above object is attained by a rolling bearing comprising: a first race ring having a first race way; a second race ring having a second race way concentric with and opposed to the first race way; a side member provided on at least one side end portion of the first race ring; an annular guide surface provided on an inner side of the side member, the annular guide surface being concentric with the first race way; a plurality of rolling elements arranged between the first race ring and the second race ring; and a plurality of rotating elements each disposed between adjacent ones of the rolling elements in a circumferential direction, the plurality of rotating elements being brought into contact with the guide surface of the side member in such a manner as to be capable of rolling thereon.

The operating principle of the rolling bearing constructed as described above in accordance with the present invention is as follows.

When the first race ring rotates clockwise with the second race ring fixed, the rolling elements in contact with the first race way undergoes revolving motion clockwise while rotating clockwise. In addition, the rotating elements in contact with the rolling elements undergo revolving motion clockwise while rotating counterclockwise.

At this time, the direction of rotation of the guide surface and the direction of the composite speed of rotation and revolution of the rotating element at its point of contact with the guide surface are the same. Hence, such a state in which the surfaces of rotating motion of the rolling elements and the stationary surfaces of pockets of the retainer come into direct contact with each other as in the case of the conventional rolling bearing is absent, and the rolling bearing rotates smoothly.

Here, preferably, if the ratio between the radius of each rotating element and the radius of rotation of each rotating member at its point of contact with the guide surface is made equal to the ratio between the radius of the guide surface of the side member and the radius of the surface of contact of the first race ring in contact with the rolling element, it is possible to cause the speeds at the respective portions to coincide with each other, and the respective portions undergo virtually complete rolling motion at all the points of contact, thereby making it possible to substantially reduce the frictional loss.

By providing such a setting, the rolling elements and the first race ring are able to continue to rotate while maintaining mutual positional relationship by virtually complete rolling motion between the rolling elements and the first race ring. Accordingly, when the first race ring rotates with the second race ring stopped, the sliding friction such as the one noted with respect to the conventional retainer does not occur.

Conversely, when the second race ring rotates with the first race ring stopped, the relationship in the relative motion of the respective portions is the same, and it goes without saying that the sliding friction such as the one noted with respect to the conventional retainer does not occur.

In addition, the present invention can be realized not only in an arrangement in which the rolling elements are ball-shaped, and an axis of rolling of each of the rolling elements is parallel to an axis of rotation of the bearing, but also in an arrangement in which the axis of rolling of each of the rolling elements is inclined with respect to the axis of rotation of the bearing. The former is a type which is generally referred to as a radial bearing, while the latter is referred to as an angular contact type.

In addition, in accordance with the present invention, the above object is also attained by a rolling bearing comprising: a first race ring having a first race way; a second race ring having a second race way concentric with and opposed to the first race way; a pair of side members respectively provided on both side end portions of the first race ring; an annular guide surface provided on an inner side of each of the side members, the annular guide surface being concentric with the first race way; a plurality of rolling elements each having a cylindrical shape and having small-diameter portions at both ends thereof, the plurality of rolling elements being arranged between the first race ring and the second race ring; the first race way of the first race ring and the second race way of the second race ring having cross-sectional shapes which come into linear contact with the rolling elements in an axial direction; and a plurality of rotating elements each disposed between the small-diameter portions of adjacent ones of the rolling elements in a circumferential direction, the plurality of rotating elements being brought into contact with the guide surface of each of the side members in such a manner as to be capable of rolling thereon.

Further, in such an arrangement, each of the rolling elements may be a so-called tapered roller whose cross-section is formed to be gradually larger toward its one side. In this case, since the tapered rollers are unable to move toward the small-diameter side, it suffices if the ball-shaped rotating elements are disposed only on the large-diameter side of the rolling elements, and the rotating elements on the small-diameter side may be omitted.

What is common in the above description is that the shape of the rotating elements is spherical, and such rotating elements can be fabricated easily at low cost. As a result, the state of virtually complete rolling contact can be realized at very low cost.

As is apparent from the foregoing description, since all the motion at the contact portions of the rolling bearing in accordance with the present invention takes place in the form of rolling motion, the sliding friction during rotation is virtually nil, and the rotation is smooth. In addition, the present invention is applicable to not only a radial bearing but also a bearing which receives thrust load. In particular, since the rotating elements are spherical, the fabrication is facilitated, and the rolling bearing in accordance with the present invention can be realized at very low cost, so that its fields of application are wide, and its advantages are quite remarkable in the improvement of the performance of machine products and in the reduction of cost.

The above and other objects, features and advantages of the present invention will become more apparent from the following detailed description of the invention when read in conjunction with the accompanying drawings.

BRIEF DESCRIPTION OF THE DRAWINGS

    Fig. 1 is a cross-sectional view taken along a plane including the axis of a rolling bearing in accordance with an embodiment of the present invention;
    Fig. 2 is a cross-sectional view taken along planes orthogonal to the axis of the bearing and passing through points A, B, C, D, E, and F in Fig. 1;
    Fig. 3 is a cross-sectional view taken along a plane including the axis of a rolling bearing in accordance with another embodiment of the present invention;
    Fig. 4 is a cross-sectional view taken along a plane including the axis of a rolling bearing in accordance with still another embodiment of the present invention; and
    Fig. 5 is a cross-sectional view taken along a plane including the axis of a rolling bearing in accordance with a further embodiment of the present invention

DESCRIPTION OF THE PREFERRED EMBODIMENTS

Referring now to the accompanying drawings, a description will be given of the embodiments of the present invention.

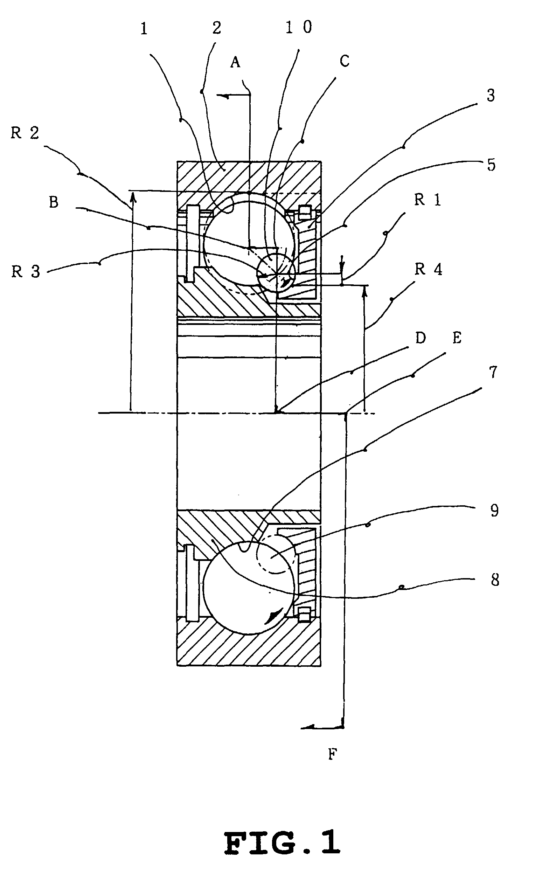

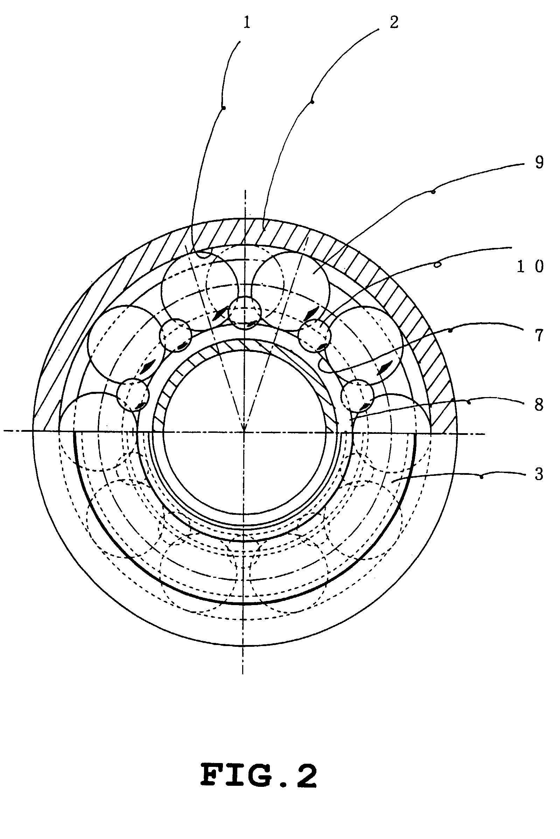

In Figs. 1 and 2, a flange-like side member 3 is provided on one side surface of a first race ring 2 on which a first race way 1 having an arcuate cross section and forming an annular groove is formed. An annular guide surface 5 concentric with the race way 1 is formed on a cylindrical inner side of the side member 3. A plurality of ball-shaped rolling elements 9 are arranged between the first race ring 2 and a second race ring 8 having a second race way 7 forming an annular groove with an arcuate cross section in face-to-face relation to the first race way 1. In addition, ball-shaped rotating elements 10 are respectively incorporated between adjacent ones of the rolling elements 9 in the circumferential direction in such a manner as to be capable of rolling in a state of contact with the guide surface 5 of the side member 3.

It should be noted that, in this embodiment, the first race ring 2 forms an outer ring of the bearing, while the second race ring 8 forms an inner ring thereof.

A description will be given of the operation of the rolling bearing in accordance with this embodiment constructed as described above.

In the rolling bearing of the embodiment shown in Figs. 1 and 2, when the first race ring 2 rotates clockwise in Fig. 2 with the second race ring 8 fixed, the plurality of rolling elements 9 in contact with the race way 1 of the first race ring 2 undergo revolving motion clockwise while rotating clockwise. Meanwhile, the rotating elements 10 in contact with the rolling elements 9 revolve clockwise while rotating counterclockwise. At this time, the rotating elements 10 rotate about their axes of rotation parallel to the central axis of rotation of the bearing, and the rotational speed of the rotating elements 10 at their points of contact with the guide surface 5 becomes equal to the rotational speed of the guide surface 5 of the side member 3 attached to the first race ring 2 owing to the setting of a ratio between the radius of rotation at this point and the radius of the rotating element itself. By providing such a setting, virtually complete rolling motion alone takes place between the rolling elements 9 and the first race ring 2, and the rolling elements 9 and the first race ring 2 are able to continue to rotate while maintaining their mutual positional relationship. Accordingly, the sliding friction such as the one noted with respect to the conventional retainer does not occur in the rotation of the first race ring 2 with the second race ring 8 stopped.

Conversely, also in the rotation of the second race ring 8 with the first race ring 2 stopped, the relationship of relative motion of the respective portions is the same, and it goes without saying that the sliding friction such as the one noted with respect to the conventional retainer does not occur.

Accordingly, the frictional force which is produced by this motion is very small, and can be a fraction of several tens to several thousands of those of the conventional rolling bearings.

It should be noted that if a state is considered in which the bearing rotates without movement of the rotational center of the bearing and without a change in the position of the rotating elements 10, all the relevant members undergo only rotation. Therefore, if it is assumed that the radius of rotation at the point of contact of the rotating element 10 with the guide surface 5 is R1, the radius at a point of contact between the first race way 1 and the rolling element 9 from the center of the bearing is R2, the radius of the rotating element 10 is R3, and the radius at the guide surface 5 of the side member 3 from the center of the bearing is R4, as for the speeds at the respective portions when the first race ring 2 or the second race ring 8 rotates in a contacting state via the rolling elements 9, it suffices if the speed at R1 is equal to the speed at the R4 portion, and if the speed at R2 is equal to the speed at R3 via the rotating motion of the rolling element 9. Accordingly, the following proportional expression of radius holds among the respective portions:

$$R1/R4 = R3/R2$$

From this relationship, the radius of rotation, R1, can be determined as follows:

$$R1 = (R3 \cdot R4)/R2$$

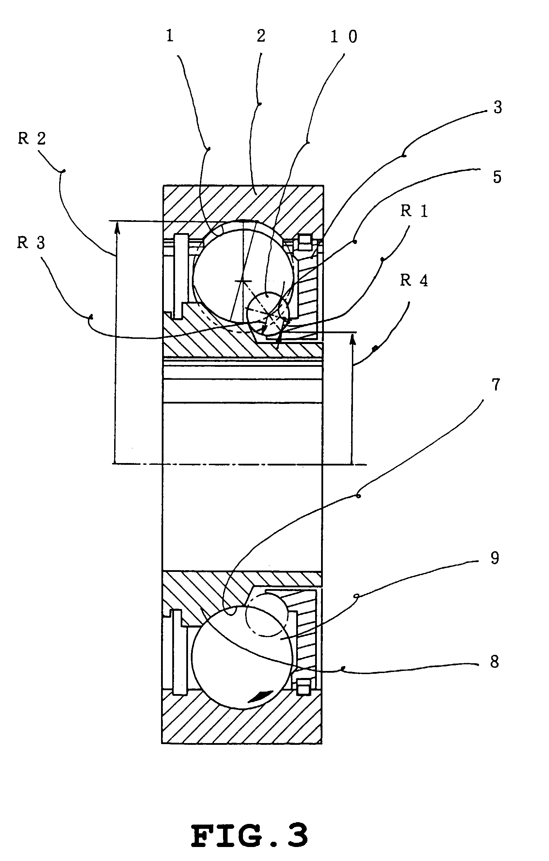

Fig. 3 is a detailed cross-sectional view taken along a plane including the axis of the bearing, illustrating the rolling bearing in accordance with another embodiment.

Fig. 3 shows a rolling bearing which is generally referred to as an angular contact type. The difference with the embodiment shown in Figs. 1 and 2 lies in that the points of contact of the rolling element 9 with the first race way 1 and the second race way 7 are inclined with respect to the rotating surfaces. Therefore, the axis of rotation of the rotating element 10 is also inclined, so that the ratio of the relative speed at the point of contact with the guide surface 5 slightly differs from that described above.

In this case, the foregoing expression can be applied by assuming that the radius of rotation at the point of contact between the rotating element 10 and the guide surface 5 with respect to the inclined axis of rotation is R1, the radius at the point of contact between the first race way 1 and the rolling element 9 from the center of the bearing is R2, the radius of the rotating element 10 is R3, and the radius at the guide surface 5 of the side member 3 from the center of the bearing is R4.

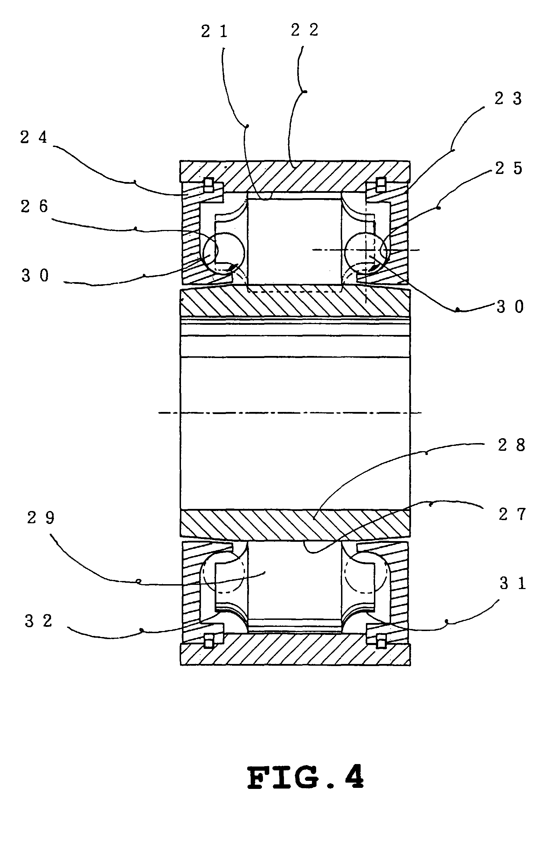

Fig. 4 is a detailed cross-sectional view taken along the plane including the axis of the bearing, illustrating the rolling bearing in accordance with still another embodiment.

In the embodiment shown in Fig. 4, rolling elements 29 are cylindrical rollers, and a first race way 21 and a second race way 27 which are respectively formed on a first race ring 22 and a second race ring 28 are provided with cross sections which come into contact with the rolling elements 29 linearly. In addition, small-diameter portions 31 and 32 are respectively provided at both ends of each rolling element 29, and flange-like side members 23 and 24 are respectively provided on both side faces of the first race ring 22. Annular guide surfaces 25 and 26 concentric with the race way 21 are respectively formed on cylindrical inner sides of the side members 23 and 24. In addition, ball-shaped rotating elements 30 are incorporated between adjacent ones of the rolling elements 29 in the circumferential direction in such a manner as to be capable of rolling in a state of abutment against the small-diameter portions 31 and 32 and in contact with the guide surfaces 25 and 26 of the side members 23 and 24, respectively.

In the case of the cylindrical roller bearing such as the one shown in Fig. 4, the contact between the small-diameter portions 31 and 32 of the rolling elements 29 and the rotating elements 30 is point contact, but the contact between the rolling elements 29 and the race ways 21 and 27 is linear, making it possible to receive large radial load and maintain load performance commensurate with the original characteristics.

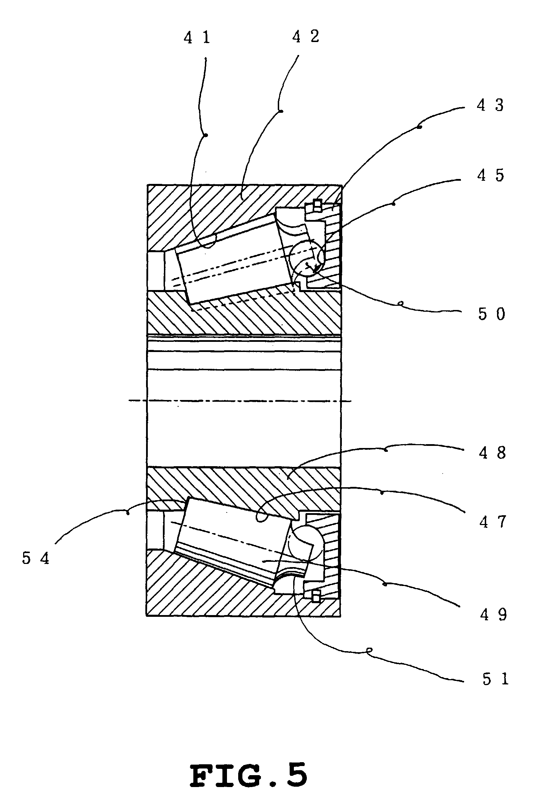

Fig. 5 is a detailed cross-sectional view taken along the plane including the axis of the bearing, illustrating the rolling bearing in accordance with a further embodiment.

In Fig. 5, rolling elements 49 are of the so-called tapered roller type whose cross-section is formed to be gradually larger toward its one side. In this case, a first race way 41 and a second race way 47 which are respectively formed on a first race ring 42 and a second race ring 48 are provided with tapered cross sections which come into contact with the rolling elements 49 linearly. The second race way 47 has a stepped end portion 54 at one end thereof. A small-diameter portion 51 is provided only on the large-diameter side of each rolling element 49, and rotating elements 50 and a guide surface 45 provided on a side member 43 are also provided on one side only. The reason for this is that the rolling elements 49 are unable to move toward the small-diameter side in the state of being placed between the race ways 41 and 47. In the case of this type of bearing, when in use, the second race ring 48 is set in the state of being pressed toward the left-hand side in the drawing with respect to the first race ring 42, so that the stepped portion 54 does not come into contact with the side surface of the rolling element 49, but is used to prevent the second race ring 48 from coming off in the state before use.

However, it goes without saying that, in the embodiment shown in Fig. 5 as well, it is possible to adopt a system in which small-diameter portions are provided at both ends of each rolling element as shown in Fig. 4, and rotating elements are respectively arranged between adjacent ones of the rolling elements and are held in contact with the guide surfaces. In this case, if the stepped portion 54 provided on the second race wing 48 is removed, the second race ring can be made detachable.

The embodiments shown in Figs. 3 and 5 are effective in supporting thrust load in the main. Particularly in the state of use for receiving the load in the direction of thrust, the load is constantly applied equally to the respective rolling elements, and, conventionally, once the adjacent rolling elements assume a state of mutual contact via the retainer walls, no means is provided for canceling this state of contact, and continuous contact friction occurs. In contrast, with the bearing of this embodiment, the surfaces of contact between the rolling element and the retainer is rolling contact, and the relative velocity is equal, the frictional distance is close to zero, and the frictional loss is very small, so that its superiority is very high.

Here, the frictional loss is calculated as the product of the frictional force of the contact portion and the distance of relative frictional movement, and refers to the amount of work which is lost by friction. In the case of the rolling contact, this distance of relative frictional movement is extremely small as compared with the state of sliding friction, with the result that the frictional loss becomes small. It should be noted that a value which is obtained by dividing this frictional loss by the rotational speed is the frictional torque.

## Claims

1. A rolling bearing comprising:

   - a first race ring (2, 22, 42) having a first race way (1, 21, 41);
   - a second race ring (8, 28, 48) having a second race way (7, 27, 47) concentric with and opposed to the first race way (1, 21, 41);
   - a side member (3; 23, 24; 43) provided on at least one side end portion of the first race ring (2, 22, 42);
   - an annular guide surface (5; 25, 26; 45) provided on an inner side of the side member (3; 23, 24; 43), the annular guide surface (5; 25, 26; 45) being concentric with the first race way (1, 21, 41);
   - a plurality of rolling elements (9, 29, 49) arranged between the first race ring (2, 22, 42) and the second race ring (8, 28, 48); and
   - a plurality of rotating elements (10, 30, 50) each disposed between adjacent ones of the rolling elements (9, 29, 49) in a circumferential direction, the plurality of rotating elements (10, 30, 50) being brought into contact with the guide surface (5; 25, 26; 45) of the side member (3; 23, 24; 43) in such a manner as to be capable of rolling thereon.

2. The rolling bearing according to claim 1, wherein the rolling elements (9) are ball-shaped, and the axis of rolling of each of the rolling elements (9) is parallel to an axis of rotation of the bearing.

3. The rolling bearing according to claim 1, wherein the rolling elements (9) are ball-shaped, and the axis of rolling of each of the rolling elements (9) is inclined with respect to an axis of rotation of the bearing.

4. A rolling bearing comprising:

   - a first race ring (22) having a first race way (21);
   - a second race ring (28) having a second race way (27) concentric with and opposed to the first race way (21);
   - a pair of side members (23, 24) respectively provided on both side end portions of the first race ring (22);
   - an annular guide surface (25,26) provided on an inner side of each of the side members (23, 24), the annular guide surfaces (25, 26) being concentric with the first race way (21);
   - a plurality of rolling elements (29) each having a cylindrical shape and having small-diameter portions (31, 32) at both ends thereof, the plurality of rolling elements (29) being arranged between the first race ring (22) and the second race ring (28);
   - the first race way (21) of the first race ring (22) and the second race way (27) of the second race ring (28) having cross-sectional shapes which come into linear contact with the rolling elements (29) in an axial direction; and
   - a plurality of rotating elements (30) each disposed between the small-diameter portions (31, 32) of adjacent ones of the rolling elements (29) in a circumferential direction, the plurality of rotating elements (30) being brought into contact with the guide surface (25, 26) of each of the side members (23, 24) in such a manner as to be capable of rolling thereon.

5. A rolling bearing comprising:

   - a first race ring (42) having a first race way (41);
   - a second race ring (48) having a second race way (47) concentric with and opposed to the first race way (41);
   - a side member (43) provided on one side end portion of the first race ring (42);
   - an annular guide surface (45) provided on an inner side of the side member (43), the annular guide surface (45) being concentric with the first race way (41);
   - a plurality of rolling elements (49) each being a tapered cylinder and having a small-diameter portion (51) at one end thereof, the plurality of rolling elements (49) being arranged between the first race ring (42) and the second race ring (48);
   - the first race way (41) of the first race ring (42) and the second race way (47) of the second race ring (48) having cross-sectional shapes which come into linear contact with the rolling elements (49) in an axial direction; and
   - a plurality of rotating elements (50) each disposed between the small-diameter portions (51) of adjacent ones of the rolling elements (49) in a circumferential direction, the plurality of rotating elements (50) being brought into contact with the guide surface (45) of the side member (43) in such a manner as to be capable of rolling thereon.

# FIG.1

1

2

9

1 0

7

8

3

# FIG.2

# FIG.3

**FIG.4**

# FIG.5

## EUROPEAN SEARCH REPORT

**European Patent Office**

**Application Number**

EP 00 10 0080

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 3 969 005 A (TRAUT EARL W) 13 July 1976 (1976-07-13) * the whole document * | 1-5 | F16C19/56 |
| X | FR 1 413 054 A (CHANTIERS DE L'ATLANTIQUE) 12 January 1966 (1966-01-12) * page 2, line 5 - page 5, line 19; figures 1-6 * | 1-3 | |
| A | US 3 423 142 A (WIETRZYKOWSKI PAUL J) 21 January 1969 (1969-01-21) * column 1 - column 2; figure 1 * | 1 | |
| A | FR 1 148 571 A (J.M. BLANCHARD) 11 December 1957 (1957-12-11) * the whole document * | 1 | |

**TECHNICAL FIELDS SEARCHED (Int.Cl.7)**

F16C

The present search report has been drawn up for all claims

| Place of search | Date of completion of the search | Examiner |
|---|---|---|
| BERLIN | 11 May 2000 | Hoffmann, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 00 10 0080

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2000

| Patent document cited in search report | | Publication date | Patent family member(s) | Publication date |
|---|---|---|---|---|
| US 3969005 | A | 13-07-1976 | NONE | |
| FR 1413054 | A | 12-01-1966 | NONE | |
| US 3423142 | A | 21-01-1969 | NONE | |
| FR 1148571 | A | 11-12-1957 | NONE | |

EPO FORM P0459

For more details about this annex : see Official Journal of the European Patent Office, No. 12/82